# FASCICULE DE BREVET EUROPEEN

(11) **EP 2 079 978 B1**
(45) Date de publication et mention de la délivrance du brevet: **12.08.2015**
(21) Numéro de dépôt: 07866436.4
(22) Date de dépôt: 25.10.2007
(51) Int. Cl.: F42B 3/04, B60R 21/264

(54) **GENERATEUR DE GAZ**
GASGENERATOR
GAS GENERATOR

(30) Priorité: 26.10.2006 FR 0609407
(43) Date de publication de la demande: 22.07.2009
(73) Titulaire: TRW Airbag Systems GmbH, 84544 Aschau am Inn (DE)
(72) Inventeur: CORD, Paul-Philippe, 75009 Paris (FR); FRANCES, Cédric, 31500 Toulouse (FR); BETEILLE, Fabien, . (FR)
(74) Mandataire: Fidal Innovation
(86) Numéro de dépôt international: PCT/FR2007/001763
(87) Numéro de publication internationale: WO 2008/053097

(56) Documents cités:
- EP-A- 1 479 573
- DE-A1-102004 046 891
- US-B1- 6 199 905

## Description

L'invention concerne un dispositif de génération de gaz, dit générateur de gaz, tel que par exemple celui décrit dans DE 10 2004 046 891 A1. En particulier, l'invention s'applique, dans le domaine de l'automobile, à un générateur de gaz destiné à être associé à un organe de sécurité pour former un système de protection (par exemple en cas de choc) d'un occupant d'un véhicule. L'invention s'étend à d'autres domaines d'application tels que l'aéronautique, le spatial, les sports...

Il existe principalement deux grandes familles de générateurs de gaz :
- les générateurs dits générateurs pyrotechniques, qui contiennent une charge explosible, généralement sous forme solide, dont la combustion génère des gaz à haute température et en général des particules,
- les générateurs dits générateurs hybrides, qui contiennent à la fois une charge explosible (généralement sous forme solide) et un gaz, neutre ou oxydant, stocké sous pression. Lorsque le gaz stocké sous pression est un gaz oxydant (le générateur de gaz est alors dit générateur hybride réactif), les produits de combustion de la charge explosible, non seulement assurent le chauffage du gaz stocké sous pression, mais de plus réagissent avec l'oxygène présent dans ce gaz. Le gaz stocké constitue la principale source des gaz générés, mais ces derniers comprennent également les gaz issus de la combustion de la charge explosible, éventuellement oxydés.

Les générateurs de gaz hybrides présentent l'inconvénient majeur d'être bien plus encombrants que les générateurs de gaz pyrotechniques, à quantité de gaz générés égale (le stockage du gaz sous pression exigeant un volume relativement important). En outre, leur ossature est généralement renforcée, et par conséquent plus lourde, pour permettre non seulement de stocker le gaz sous pression, mais aussi de résister à la surpression qui survient, en fonctionnement, lorsque les produits de combustion de la charge explosible réagissent (physiquement ou chimiquement) avec le gaz stocké.

L'invention concerne plus particulièrement un générateur de gaz pyrotechnique.

A noter qu'un générateur de gaz est dit "en fonctionnement" lorsque sa charge explosible brûle, la période de fonctionnement étant définie comme débutant à l'instant du déclenchement d'un système d'allumage apte à amorcer la combustion de la charge explosible, et comme se terminant à l'instant où le volume de gaz généré est maximum, que la décomposition de la charge explosible ait été totale ou non. Le générateur de gaz est dit "au repos" à tout moment précédant le déclenchement du système d'allumage. Enfin, les termes "durée de fonctionnement du générateur" désignent la durée de sa période de fonctionnement.

Un générateur de gaz pyrotechnique présente une ossature qui forme au moins une chambre de combustion de la charge explosible. Les caractéristiques techniques -et notamment mécaniques et thermiques- que cette ossature doit présenter dépendent du fonctionnement du générateur et de sa destination, et notamment de la nature et de la structure de l'organe de sécurité (ou autre dispositif) auquel le générateur est associé.

Certains générateurs de gaz présentent une ossature qui n'a pas pour fonction de réguler la libération des gaz. Il n'est donc pas nécessaire que cette ossature conserve son intégrité en fonctionnement. Généralement, cette ossature cède en fonctionnement, en vue de libérer de façon massive les gaz générés. En variante, l'ossature présente une large ouverture permettant de libérer, instantanément et sans régulation, les gaz générés, laquelle ouverture est fermée, au repos, par un bouchon apte à céder en fonctionnement dès l'allumage de la charge explosible. Ces générateurs de gaz sont insérés dans une culasse métallique du dispositif (organe de sécurité par exemple) auquel ils sont associés. Cette culasse métallique est destinée à assurer la cohésion, en fonctionnement, dudit générateur, et notamment à garantir le confinement de la charge explosible en combustion et des différents éléments constitutifs du générateur. Un tel générateur peut présenter une ossature en matériau polymérique, inapte à résister aux pressions et températures de fonctionnement du générateur. Tel est le cas d'un générateur de gaz utilisé pour déplacer le piston d'un élément de sécurité de type prétensionneur de ceinture de sécurité d'un véhicule, ou d'un générateur de gaz utilisé pour ouvrir un réservoir de gaz sous pression (par rupture d'un disque fermant ledit réservoir) ou pour chauffer les gaz sous pression d'un réservoir dans lequel il est placé, ou encore d'un générateur de gaz utilisé pour servir d'initiateur ou de système d'allumage à un générateur de gaz plus important. Dans tous ces exemples, le générateur de gaz est intégré dans une culasse métallique résistante (qui fait partie intégrante de l'organe de sécurité ou autre dispositif recevant le générateur, ou est éventuellement rapportée à l'intérieur de ce dispositif), laquelle culasse garantit un fonctionnement correct et sécurisé du générateur. A noter que ces générateurs sont souvent des microgénérateurs, dimensionnés pour produire une faible quantité de gaz ; ils contiennent une faible quantité de charge explosive (en général moins de 2 grammes, souvent moins de 1g), sont de petite taille et présentent des durées de fonctionnement usuellement inférieures à 10 ms et souvent inférieures à 5 ms.

A l'inverse, certains générateurs de gaz, dits générateurs à ossature résistante, sont destinés à être placés dans des environnements non confinés. L'ossature de ces générateurs ne doit pas être détruite en fonctionnement ; elle doit au contraire être apte à conserver son intégrité dans des conditions normales de fonctionnement et à garantir une régulation de la libération des gaz générés. Une telle ossature doit en particulier pouvoir, de façon autonome, contenir la charge pyrotechnique en combustion, résister à la fois à la pression régnant dans la chambre de combustion, aux éventuels chocs générés par des surpressions instantanées, à la chaleur dégagée par la combustion, aux brûlures par contact des particules incandescentes de la charge pyrotechnique en combustion. Tel est par exemple le cas des générateurs de gaz utilisés pour gonfler des éléments de sécurité tels que des coussins souples, et notamment des coussins frontaux (passager et conducteur) ou latéraux (coussins rideaux) de véhicule automobile. En outre, dans de nombreux cas, l'ossature doit être apte à résister y compris sur des durées de fonctionnement relativement importantes, notamment supérieures à 15 ms et par exemple de l'ordre de 30 ms, et pour des quantités de charge explosible relativement importantes, par exemple supérieures à 10 grammes.

Toutes les tentatives, visant à réaliser en matériau polymérique au moins une partie de l'ossature d'un générateur de gaz à ossature résistante, ont échoué à ce jour. L'utilisation des matériaux polymériques dans un tel générateur est aujourd'hui limitée à des pièces fonctionnelles devant rompre en fonctionnement (opercules, diaphragmes, capuchons de protection...). Et pour l'homme du métier, l'ossature d'un tel générateur est nécessairement entièrement réalisée dans des matériaux qualifiés de résistants, tels que certains aciers, qui présentent une résistance à la traction importante -notamment supérieure à 500 MPa- et une température de fusion élevée, nécessairement supérieure à 450°C et de préférence supérieure à 1000°C.

Ces matériaux résistants sont lourds, ce qui est particulièrement pénalisant dans des applications (domaines de l'automobile, du spatial et de l'aéronautique par exemple) où diminuer la masse des équipements est une véritable obsession. L'utilisation de ces matériaux résistants et lourds grèvent significativement non seulement les coûts de fabrication des générateurs de gaz, mais aussi les coûts liés à leur intégration, dans un véhicule par exemple, et les coûts d'exploitation du véhicule.

L'invention vise à proposer un générateur de gaz pyrotechnique à ossature résistante qui soit beaucoup plus léger et bien moins onéreux.

Un objectif de l'invention est ainsi d'ouvrir de nouvelles possibilités d'application des générateurs de gaz.

L'invention vise également d'une part à offrir une plus grande latitude dans la conception de la forme générale du générateur, et d'autre part à permettre, dans une certaine mesure, de modifier ou de modeler cette forme une fois le générateur fabriqué. Un objectif de l'invention est ainsi de faciliter l'intégration du générateur dans un cousin gonflable de sécurité par exemple ou dans tout autre dispositif destiné à l'accueillir.

Un autre objectif de l'invention est de fournir un générateur de gaz pyrotechnique plus sécurisé.

L'invention concerne plus spécifiquement un générateur de gaz qui, à l'instar de certains des dispositifs décrits dans les publications WO 01/89885, WO 2004/091981 et FR 05 12745 au nom de la demanderesse, comprend les caracteristiques de la revendication 1.

Tout autre système d'allumage, apte à être déclenché par un signal électrique ou encore pneumatique, hydraulique, mécanique, optique, électromagnétique..., est conforme à l'invention. En particulier, le système d'allumage peut être du type à laser.

Le générateur de gaz selon l'invention est caractérisé en ce que:
- la partie d'ossature formant la chambre secondaire comprend au moins une paroi, dite paroi allégée de la chambre secondaire, réalisant une interface entre l'intérieur de la chambre secondaire et l'extérieur du générateur de gaz ; en d'autres termes, une telle paroi allégée présente une face interne formant une face intérieure de ladite chambre secondaire et une face externe formant une face extérieure du générateur de gaz ;
- chaque paroi allégée de la chambre secondaire est en au moins un matériau polymérique solide étanche au gaz, le(s)dit(s) matériau(x) polymérique(s) étant adapté(s) pour former une(des) paroi(s) allégée(s) présentant une température, dite température de perte des propriétés mécaniques, supérieure à 120°C et possédant des caractéristiques mécaniques telles que la chambre secondaire présente un volume interne dont la valeur en fonctionnement est inférieure à quatre fois sa valeur au repos. A noter que le terme "solide" désigne l'état du matériau dans des conditions normales de température et de pression lorsque le générateur de gaz est au repos (température et pression ambiantes), selon un sens commun qui distingue trois états : solide, liquide et gazeux. De même, le terme "étanche" est utilisé dans son sens usuel ; il ne signifie pas que le matériau présente nécessairement un taux de fuite (caractérisant sa perméation au gaz) extrêmement faible.

Par ailleurs, Les termes "températures de perte des propriétés mécaniques" font référence à :
- la température de ramollissement Vicat (VST) dans le cas d'un matériau thermoplastique (laquelle température peut être mesurée par exemple selon l'une des méthodes proposées par la norme ISO 306:2004),
- la température de fusion dans le cas de certains matériaux thermodurcissables et de certains élastomères (laquelle température peut être mesurée par exemple à l'aide d'un banc Kofler),
- la température de décomposition chimique (carbonisation) dans le cas des matériaux thermodurcissables et élastomères qui n'ont pas de température de fusion.

A noter que, dans une version préférée, les composés primaire et secondaire sont également adaptés pour que la décomposition du composé secondaire soit pilotée par des produits de combustion du composé primaire. A cette fin :
- le composé secondaire est un composé dont la décomposition autonome et totale nécessite, dans des conditions normales de fonctionnement du générateur de gaz, un temps au moins trois fois supérieur -et de préférence au moins dix fois supérieur- à une durée maximale de mission du générateur de gaz ; en particulier, le composé secondaire peut être un composé dont la décomposition n'est pas autoentretenue dans des conditions normales de fonctionnement du générateur de gaz (le temps nécessaire à sa décomposition autonome et totale est dans ce cas considéré comme étant infini) ;
- le composé primaire est un composé pyrotechnique dont la combustion est autoentretenue et génère des produits de combustion énergétiques (qui de préférence quittent la chambre primaire sous la forme d'un jet supersonique) possédant une énergie suffisante pour permettre et entretenir la décomposition du composé secondaire sur la durée maximale de mission du générateur de gaz. En d'autres termes, le composé primaire est un composé pyrotechnique apte à brûler seul et rapidement une fois allumé, et à générer un jet très énergétique. La vitesse et la durée totale de décomposition du composé secondaire dépendent essentiellement du composé primaire et notamment de sa nature, de sa quantité initiale, de sa loi de combustion et du débit d'expulsion de ses produits de combustion.

La nature et la quantité de composé primaire sont choisies en fonction du débit de libération des gaz et de la durée maximale de mission souhaités. Le composé primaire peut être un propergol double base (à base de nitrocellulose et de nitroglycérine) et/ou un propergol composite (comprenant un liant organique et une charge oxydante) et/ou une poudre balistique de type Lova.

La quantité de composé secondaire est choisie en fonction du volume de gaz à produire. Le composé secondaire comprend par exemple principalement du nitrate d'ammonium et/ou du nitrate de guanidine et/ou du nitrate basique de cuivre, apte(s) à générer un important volume de gaz en se décomposant et à oxyder les produits de combustion du composé primaire (qui comprennent principalement du monoxyde de carbone) de façon à limiter la quantité de gaz toxiques et/ou de poussières susceptibles de s'échapper du générateur de gaz.

Un générateur de gaz selon l'invention fonctionne comme suit : la réception d'un signal prédéterminé par le système d'allumage amorce la combustion du composé primaire dans la chambre primaire. Les produits (gazeux) de combustion du composé primaire sont expulsés de la chambre primaire par le ou les orifices d'expulsion, en formant un jet, dit jet primaire, à chaque orifice d'expulsion. Chaque jet primaire pénètre dans la chambre secondaire par une ouverture d'entrée de ladite chambre et vient frapper le composé secondaire, entraînant sa décomposition. Les gaz générés sont évacués de la chambre secondaire dans la zone de stabilisation par la ou les ouvertures d'évacuation, puis du générateur par les trous d'échappement des gaz. Dans le cas avantageux où le composé primaire est un propergol composite et/ou de type Lova et où le composé secondaire comprend du nitrate d'ammonium et/ou du nitrate de guanidine, chaque jet primaire pénétrant dans la chambre secondaire présente une température supérieure à 2000°C, et la pression régnant dans ladite chambre secondaire est de l'ordre de 50 à 200 bars.

Contre toute attente, les inventeurs ont pu constater que la ou les parois allégées du générateur selon l'invention conservaient leur intégrité en fonctionnement et étaient compatibles avec un fonctionnement efficace et sécurisé du générateur de gaz : le fonctionnement du générateur n'entraîne ni leur rupture, ni leur ramollissement, ni leur fusion, ni leur décomposition, en dépit des conditions extrêmes (rappelées ci-dessus) auxquelles lesdites parois allégées sont soumises. Ces conditions ne pouvaient aucunement laisser penser que de telles parois allégées, en matériaux polymériques c'est-à-dire en matériaux peu résistants et susceptibles de fondre ou ramollir ou se décomposer à des températures inférieures à 400°C (et généralement inférieures à 300°C), pourraient résister et n'être quasiment pas endommagées par le(s) jet(s) primaire(s) et par la décomposition (il s'agit aussi d'une combustion) du composé secondaire. Et ce résultat surprenant est atteint y compris avec des parois allégées de très faible épaisseur (notamment inférieure à 10 mm), y compris avec des matériaux polymériques ayant une faible température de perte des propriétés mécaniques et ne présentant donc aucune tenue à la température, y compris pour des durées de fonctionnement relativement longues (supérieures à 15 ms) et y compris pour des quantités de charge explosible relativement importantes (supérieures à 10 grammes).

Les inventeurs ont également constaté avec surprise que tant les matériaux polymériques thermoplastiques que les matériaux polymériques thermodurcissables assuraient un fonctionnement efficace et sécurité du générateur selon l'invention.

Les inventeurs supposent, a posteriori, que ces résultats tout à fait étonnants sont dus aux phénomènes suivants.

Tout d'abord, compte tenu de la structure et du fonctionnement du générateur selon l'invention, la pression à l'intérieur de la chambre secondaire est comprise entre 50 et 200 bars, contre 300 à 800 bars (en particulier dans des conditions extrêmes de température, 85°C par exemple) dans un générateur antérieur classique comprenant une ou plusieurs chambres de combustion avec du propergol.

Ensuite et surtout, chaque jet primaire du générateur selon l'invention forme un faisceau gazeux énergétique très dirigé, et l'énergie transmise par ledit jet primaire est à ce point localisée qu'à chaque instant, seules les particules de composé secondaire frappées par le jet ou situées à proximité immédiate du jet subissent une décomposition. Le jet étant extrêmement énergétique (il possède une température supérieure à 2000°C et surtout une vitesse supersonique du fait de l'importante pression générée dans la chambre primaire par la combustion du composé primaire), cette décomposition est instantanée et totale.

De plus, les gaz générés par cette décomposition s'évacuent à contre-courant du jet, le long des parois de la chambre secondaire. Ce contre-courant contribue à bien mélanger et faire réagir les produits de décomposition des chambres primaire et secondaire, et à former une couche gazeuse de protection des parois de ladite chambre.

Ainsi, la décomposition du composé secondaire ne génère quasiment aucune braise, et en tout état de cause aucune braise susceptible de rester au contact d'une paroi de la chambre secondaire pendant une durée suffisante pour endommager ladite paroi au point de compromettre le fonctionnement sécurisé du générateur de gaz. Les échanges thermiques par conduction entre le composé secondaire et les parois de la chambre secondaire sont négligeables. Par ailleurs, le contre-courant éventuellement formé par les gaz générés contribue à évacuer par convexion la chaleur dégagée par la décomposition du composé secondaire.

Ces conditions ne se retrouvent pas dans les générateurs antérieurs classiques, dont toutes les chambres de combustion renferment un propergol. La combustion du mélange n'est pas localisée ; des particules de propergol brûlent dans toute la chambre, y compris au contact des parois de ladite chambre. Cette combustion, qui n'est possible qu'à haute pression (300 à 800 bars), génère des braises incandescentes, qui entraînent, avant même leur décomposition totale, la fusion ou la décomposition des parois de la chambre si ces dernières sont en matériau polymérique.

Alors que les ossatures de tous les générateurs connus sont entièrement en matériaux rigides (métalliques), les inventeurs ont également établi que la présence d'une ou plusieurs parois allégées en matériaux polymériques non rigides, tels que des élastomères (caoutchoucs naturels, caoutchoucs synthétiques...), était compatible avec un bon fonctionnement du générateur selon l'invention, à condition toutefois que les gaz générés puissent être libérés du générateur et que la déformation de la ou des parois allégées n'absorbe qu'une partie négligeable de la pression et du volume de gaz générés. Les inventeurs ont déterminé que le fonctionnement du générateur était tout à fait satisfaisant si "l'élasticité dynamique" du ou des matériaux polymériques était suffisamment faible pour garantir que la chambre secondaire ne quadruple pas de volume sur la durée de fonctionnement du générateur.

Les inventeurs ont également déterminé que les parois allégées selon l'invention pouvaient être en mousse (dès lors que ladite mousse est étanche au gaz).

Finalement, tous les matériaux polymériques (tels que définis selon l'invention) conviennent pour la réalisation des parois allégées selon l'invention.

Un générateur de gaz selon l'invention, dont au moins une partie de l'ossature de la chambre secondaire est en matériau(x) polymérique(s), est plus léger et moins onéreux que les générateurs antérieurs.

Il est aussi plus sûr, notamment face au feu. En effet, le comportement au feu des générateurs antérieurs, à ossature entièrement métallique, pose problème : dans un premier temps, le feu entraîne une augmentation de la température de la charge explosible dans la chambre de combustion du générateur, sans pour autant provoquer l'allumage de ladite charge ; parallèlement, l'ossature du générateur se ramollit sous l'effet de la température ; dans un deuxième temps, la température de la charge explosible a atteint un niveau tel que la charge s'allume ; l'ossature, qui a perdu sa capacité de confinement et de résistance, éclate en fragments, lesquels fragments sont violemment projetés par les gaz générés par la combustion de la charge explosible. A l'inverse, un générateur selon l'invention est automatiquement neutralisé par le feu : la paroi allégée de la chambre secondaire fond très rapidement, bien avant que le composé primaire ne puisse s'allumer ; lorsque les conditions sont atteintes pour que le composé primaire s'allume, le ou les jets primaires que génère sa combustion se retrouvent expulsés dans une chambre secondaire totalement ouverte ; aucun fragment ne peut être produit (l'ossature de la chambre secondaire ayant totalement fondu) et la pression est insuffisante pour que ce ou ces jets puissent entraîner une décomposition du composé secondaire ; la faible quantité de gaz générée par la seule combustion du composé primaire se disperse aisément dans l'environnement du générateur.

Avantageusement et selon l'invention, la partie d'ossature formant la zone de stabilisation comprend elle aussi au moins une paroi, dite paroi allégée de la zone de stabilisation, réalisant une interface entre l'intérieur de la zone de stabilisation et l'extérieur du générateur de gaz, chaque paroi allégée de la zone de stabilisation étant en au moins un matériau polymérique solide étanche au gaz, le(s)dit(s) matériau(x) polymérique(s) étant adapté(s) pour former une(des) paroi(s) allégée(s) présentant une température de perte des propriétés mécaniques supérieure à 120°C et possédant des caractéristiques mécaniques telles que la zone de stabilisation présente un volume interne dont la valeur en fonctionnement est inférieure à quatre fois sa valeur au repos, au moins une partie des trous d'échappement étant ménagés dans au moins une paroi allégée de la zone de stabilisation.

A noter que l'utilisation de matériaux polymériques souples, déformables ou élastiques, pour réaliser au moins partiellement la partie d'ossature formant la chambre secondaire et/ou la partie d'ossature formant la zone de stabilisation, présente divers avantages :
- de façon générale, l'utilisation de ces matériaux permet de modifier la forme du générateur, dans une mesure toutefois limitée qui doit être compatible avec son fonctionnement, et de modeler ainsi celui-ci en fonction de l'espace qui lui est réservé dans le véhicule par exemple ; en d'autres termes, quelle que soit l'application concernée, l'utilisation d'un matériau souple, déformable ou élastique permet de faciliter l'intégration du générateur de gaz dans le système auquel il est destiné, et autorise le développement de nouvelles applications pour les générateurs de gaz ;
- la sécurisation du générateur est améliorée lorsque la partie d'ossature formant la zone de stabilisation comprend une paroi allégée souple, déformable ou élastique, telle que précédemment définie c'est-à-dire pourvue de trous d'échappement des gaz générés. En effet, tout risque d'emballement du générateur est alors écarté : si la pression vient à monter de façon anormale et importante dans le générateur, en dehors de son fonctionnement, la paroi allégée de la zone de stabilisation se déforme et les trous d'échappement s'agrandissent, permettant de libérer une plus grande quantité de gaz ; la pression au sein du générateur est ainsi automatiquement régulée. Il en va de même durant le fonctionnement du générateur. Les éventuelles surpressions instantanées qui peuvent survenir au sein du générateur sont ainsi automatiquement corrigées ; le fonctionnement du générateur est régularisé, la combustion est maîtrisée et les résultats s'en trouvent améliorés. En outre, cette propriété d'autorégulation tant au repos qu'en fonctionnement, permet d'augmenter les tolérances de fabrication et de diminuer l'ensemble des risques (pour les personnes) liés à la fabrication, à l'intégration dans un système et à la présence dans ce système d'un générateur de gaz.

Avantageusement et selon l'invention, le générateur de gaz présente l'une ou plusieurs des caractéristiques suivantes :
- chaque matériau polymérique présente une température de perte des propriétés mécaniques inférieure à 300°C ; en d'autres termes, les matériaux polymériques utilisés pour les parois allégées sont des matériaux polymériques basiques et peu onéreux ;
- le générateur de gaz contient une quantité de charge explosible supérieure à 2,5 grammes, et notamment supérieure à 5 grammes, voire supérieure à 10 grammes; un tel générateur peut être utilisé pour gonfler des coussins de sécurité frontaux ou latéraux de véhicule automobile ;
- le générateur de gaz est adapté pour présenter une durée de fonctionnement supérieure à 15 ms ; bien entendu, l'invention s'applique à des générateurs de gaz présentant des durées de fonctionnement inférieures ;
- chaque orifice d'expulsion présente un diamètre inférieur à 6 mm, et de préférence inférieur à 4 mm ;
- chaque paroi allégée de la chambre secondaire présente une épaisseur maximale inférieure à 10 mm, de préférence comprise entre 0,5 et 5 mm, et notamment comprise entre 1 et 3 mm ; de préférence, ladite paroi présente une épaisseur constante ;
- chaque paroi allégée de la zone de stabilisation présente une épaisseur maximale inférieure à 10 mm, de préférence comprise entre 0,5 et 5 mm, et notamment entre 1 et 3 mm ; ladite paroi présente avantageusement une épaisseur constante ;
- le système d'allumage comprend un initiateur et une charge renforçatrice ; ladite charge renforçatrice est stockée en vrac dans la chambre primaire (elle est dans ce cas mélangée au composé primaire) ou conditionnée dans un récipient placé dans la chambre primaire en contact avec l'initiateur.

Dans une variante préférée, le générateur de gaz présente une forme générale globalement cylindrique allongée. La chambre primaire, la zone de stabilisation et la chambre secondaire se succèdent selon une direction axiale du générateur de gaz. Dans la première version de l'invention, elles se succèdent selon cette direction axiale dans l'ordre suivant : chambre primaire, puis zone de stabilisation, puis chambre secondaire. Dans la deuxième version de l'invention, elles se succèdent dans l'ordre suivant : chambre primaire, puis chambre secondaire, puis zone de stabilisation.

Avantageusement et selon l'invention, un générateur de gaz selon cette variante présente l'une ou plusieurs des caractéristiques suivantes :
- la partie d'ossature formant la chambre secondaire comprend une paroi allégée, dite paroi allégée périphérique de la chambre secondaire, cylindrique -de préférence de section circulaire- ; de préférence, cette paroi périphérique s'étend sur la totalité d'une dimension, dite longueur, de ladite chambre secondaire selon la direction axiale du générateur de gaz ; en variante, elle s'étend seulement sur une partie de la longueur de ladite chambre secondaire ;
- la partie d'ossature formant la zone de stabilisation comprend une paroi allégée, dite paroi allégée périphérique de la zone de stabilisation, cylindrique -de préférence de section circulaire- ; de préférence, cette paroi périphérique s'étend sur la totalité d'une dimension, dite longueur, de ladite zone de stabilisation selon la direction axiale du générateur de gaz ; en variante, elle s'étend seulement sur une partie de la longueur de ladite zone de stabilisation ;
- les parois allégées périphériques de la chambre secondaire et de la zone de stabilisation sont formées par un même tube. Chaque paroi allégée correspond à un tronçon dudit tube. Dans une première version, le tube présente une section identique sur toute la longueur (dimension selon la direction axiale du générateur) de la chambre secondaire et de la zone de stabilisation ; en d'autres termes, le tube présente un diamètre externe et un diamètre interne -et par conséquent une épaisseur- constants sur toute cette longueur. De préférence, le tube présente une section identique sur toute sa longueur et peut donc être obtenu, de façon industrielle, par extrusion. Dans une deuxième version, le tronçon de tube formant la paroi allégée périphérique de la chambre secondaire présente un diamètre interne constant et différent de celui, également constant, du tronçon de tube formant la paroi allégée périphérique de la zone de stabilisation, de sorte qu'un épaulement interne apparaît entre la chambre secondaire et la zone de stabilisation ; un tel tube est obtenu par injection ou autre procédé de moulage ou par tout autre procédé adapté (thermoformage, emboutissage, fluage, etc.) ; l'épaulement interne ainsi formé sert au positionnement et au calage d'une grille séparant la chambre secondaire et la zone de stabilisation ;
- dans la première version de l'invention, la partie d'ossature formant la chambre secondaire comprend une paroi allégée, dite paroi allégée d'extrémité de la chambre secondaire, fermant une extrémité axiale de ladite chambre secondaire. Dans le cas avantageux où la partie d'ossature formant la chambre secondaire comprend aussi une paroi allégée périphérique, les parois allégées périphérique et d'extrémité peuvent être formées par une même pièce, d'un seul tenant, obtenue par injection ou autre procédé adapté. En variante, les deux parois correspondent à deux pièces initialement indépendantes et qui sont liées de façon étanche par soudure (friction, laser, ultrasons, haute fréquence, lame chauffante...), collage, formage à chaud, insertion en force de la paroi d'extrémité dans la paroi périphérique, etc..

- le générateur de gaz, et par conséquent sa chambre secondaire, présente un diamètre externe maximal inférieur ou égal à 35 mm, de préférence inférieur ou égal à 25 mm, et par exemple de l'ordre de 15 à 20 mm. Contre toute attente, les inventeurs ont constaté qu'il était possible de réaliser des générateurs de très petits diamètres, et en particulier de diamètres inférieurs à ceux des générateurs antérieurs connus, y compris lorsque la partie d'ossature formant la chambre secondaire comprend une paroi allégée périphérique. Bien que le jet primaire soit dans ce cas très proche de la paroi périphérique, cette dernière n'est endommagée ni par le jet primaire ni surtout par la décomposition (ou combustion) du composé secondaire. Ce qui tend à confirmer que seules les particules directement frappées par le jet sont brûlées et que leur décomposition est totale et instantanée.

Avantageusement et selon l'invention, chaque paroi allégée de la chambre secondaire et, le cas échéant, de la zone de stabilisation est en un ou plusieurs matériau(x) polymérique(s)choisi(s) parmi :
- les matériaux polymériques thermodurcissables, les matériaux polymériques thermoplastiques, les élastomères,
- les matériaux polymériques rigides, les matériaux polymériques souples, les matériaux polymériques élastiques,
- les mousses (souples, rigides et semi-rigides, dès lors qu'elles sont étanches au gaz ou qu'elles sont associées à un autre matériau polymérique susceptible de conférer à la paroi allégée une étanchéité au gaz),
- les matériaux polymériques synthétiques, les matériaux polymériques naturels (notamment à base de cellulose), les matériaux polymériques artificiels,
- les matériaux polymériques homogènes, les matériaux polymériques stratifiés, les matériaux polymériques renforcés par des fibres de carbone ou de verre ou des fibres polymériques (bien que ces renforts ne soient pas nécessaires au bon fonctionnement du générateur),
- les homopolymères, les copolymères, les alliages de polymères, les polymères interpénétrés,
- les polyamides, les polyoléfines (et notamment les polyéthylènes et les polypropylènes), les polymères vinyliques (et notamment les polychlorures de vinyle), les polymères styréniques (et notamment les polystyrènes et les polyméthacrylates), les polyesters, les polymères acryliques, les polyuréthannes, les phénoplastes, les époxydes, l'EPDM, les polycarbonates, le polyacrilonitrile, les silicones, les latex (synthétiques ou naturels),
- les matériaux polymériques améliorés par un ou plusieurs additifs choisis parmi :
   ▪ les charges minérales -telles que le kaolin, le mica, la silice, la craie, le graphite- et les charges végétales -telles que la cellulose, le coton, les farines de bois-, notamment en vue de diminuer le coût de revient du générateur,
   ▪ les plastifiants (adipates, sébacates, stéarates...), en vue notamment d'accroître la souplesse de la paroi allégée,
   ▪ les stabilisants, pour s'opposer au vieillissement de la paroi allégée sous l'effet de la chaleur ambiante, des ultraviolets..., et pour lutter contre l'oxydation,
   ▪ les colorants.

A noter que le composé secondaire peut être directement stocké dans la chambre secondaire. En variante, il y est stocké conditionné dans un sac souple étanche ou dans une cartouche rigide. Un tel conditionnement ne fait pas partie de la partie d'ossature formant la chambre secondaire, à l'exception éventuellement d'un fond de la cartouche dans le cas d'un générateur de gaz de forme globalement cylindrique allongée conforme à la première version de l'invention (voir plus loin). Pour ne pas alourdir le générateur de gaz, le sac ou la cartouche présente une épaisseur la plus faible possible et est de préférence en matériau(x) polymérique(s). De tels conditionnements simplifient le procédé de fabrication du générateur.

L'invention concerne également un générateur de gaz caractérisé en combinaison par tout ou partie des caractéristiques mentionnées ci-dessus et ci-après.

D'autres buts, caractéristiques et avantages de l'invention apparaîtront à la lecture de la description suivante qui se réfère aux figures annexées représentant des modes de réalisation préférentiels de l'invention, donnés uniquement à titre d'exemples non limitatifs.
La figure 1 est une coupe longitudinale d'un premier mode de réalisation d'un générateur de gaz selon la première version de l'invention.
La figure 2 est une coupe longitudinale d'un deuxième mode de réalisation d'un générateur de gaz selon la première version de l'invention.
La figure 3 est une coupe longitudinale d'un troisième mode de réalisation d'un générateur de gaz selon la première version de l'invention.
La figure 4 est une coupe longitudinale d'un quatrième mode de réalisation d'un générateur de gaz selon la première version de l'invention.
La figure 5 est une coupe longitudinale d'un cinquième mode de réalisation d'un générateur de gaz selon la première version de l'invention.
La figure 6 est une coupe longitudinale d'un sixième mode de réalisation d'un générateur de gaz selon la première version de l'invention.

Dans toute la suite, par souci de simplicité, la partie d'ossature formant la chambre secondaire est dite "ossature de la chambre secondaire" ; la partie d'ossature formant la zone de stabilisation est dite "ossature de la zone de stabilisation" ; et la partie d'ossature formant la chambre primaire est dite "ossature de la chambre primaire".

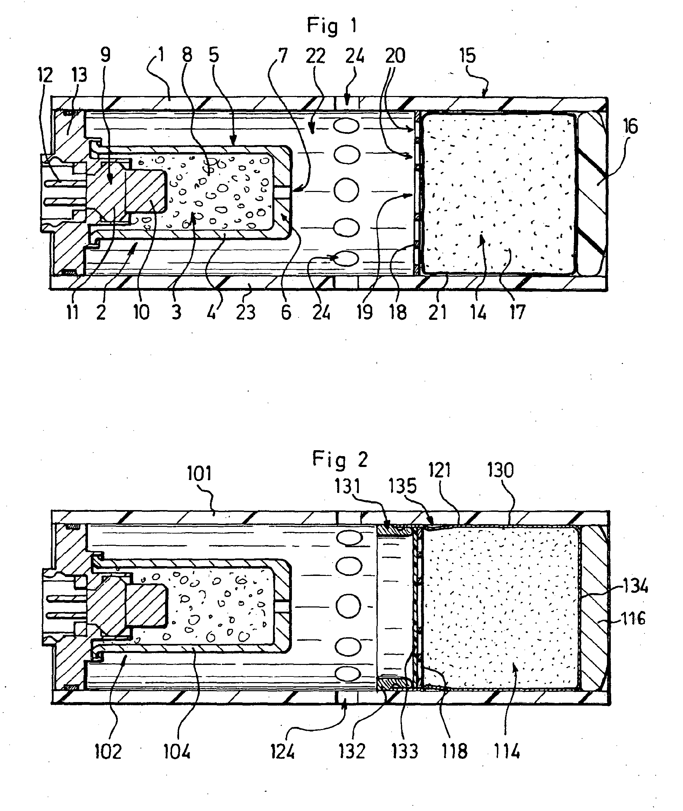

La figure 1 illustre un premier mode de réalisation d'un générateur de gaz selon l'invention présentant une forme globalement cylindrique allongée. Le générateur de gaz comprend un tube 1 cylindrique de section circulaire qui constitue l'essentiel de l'ossature du générateur de gaz et s'étend sur toute la longueur (dimension selon la direction axiale du générateur) de ce dernier. Ce tube est en un matériau polymérique, par exemple en polyamide PA6. Il est obtenu par extrusion. Il présente :
- un diamètre externe compris entre 10 et 50 mm, de préférence compris entre 20 et 35 mm,
- un diamètre interne compris entre 8 et 49,5 mm, de préférence compris entre 15 et 34,
- une épaisseur comprise entre 0,5 et 10 mm, de préférence comprise entre 1 et 5 mm,
- une longueur comprise entre 40 et 250 mm.

A titre d'exemple, le tube 1 présente un diamètre externe de 25 mm, un diamètre interne de 21 mm, une épaisseur de 2 mm et une longueur de 110 mm, et le générateur formé est apte à gonfler un coussin gonflable frontal de 65 litres en 25 ms.

Le générateur de gaz selon le premier mode de réalisation (figure 1) comprend également un impulseur 2 usuel, disponible dans le commerce. Un impulseur est un microgénérateur de gaz (de faible charge) à ossature résistante. L'impulseur 2 comporte une chambre 3 délimitée par une enceinte 4 métallique épaisse, laquelle enceinte comprend une portion 5 cylindrique et une portion 6 plane fermant une extrémité axiale de la portion cylindrique. La portion plane 6 est percée d'un orifice 7. La chambre 3 est fermée par un système d'allumage 9 à l'autre extrémité axiale de la portion cylindrique 5. Ladite chambre 3 réalise la chambre primaire selon invention ; elle contient un composé primaire 8 dont les produits de combustion peuvent être expulsés par l'orifice 7 dit orifice d'expulsion. A noter que cet orifice d'expulsion est initialement fermé par un opercule, qui fond ou se déchire quasiment dès l'allumage du composé primaire. Le composé primaire est de préférence un propergol composite ou de type Lova.

Le système d'allumage 9 comprend : une plaque support 13 ; une charge pyrotechnique initiatrice 11 et une charge pyrotechnique renforçatrice 10 portées par la plaque support ; et un connecteur électrique 12 relié à la charge initiatrice 11. La plaque support 13 du système d'allumage présente un diamètre externe sensiblement égal (ou très légèrement supérieur) au diamètre interne du tube 1 ; elle est insérée (éventuellement en force) dans une extrémité axiale du tube et est fixée à ce dernier par tout moyen (soudure, collage...) apte à réaliser une liaison étanche au gaz entre ladite plaque et le tube. La charge renforçatrice 10 du système d'allumage s'étend à l'intérieur de la chambre primaire 3 ; elle est en contact avec le composé primaire 8. La réception d'une charge électrique par le connecteur 12 entraîne l'allumage des charges pyrotechniques initiatrice 11 et renforçatrice 10 du système d'allumage et la combustion subséquente du composé primaire 8. L'allumage de la charge initiatrice 11 définit le début de la période de fonctionnement du générateur de gaz.

Le générateur de gaz selon le premier mode de réalisation (figure 1) comprend par ailleurs une chambre secondaire 14 cylindrique, délimitée par:
- une paroi plane 16 fermant l'une des extrémités axiales de la chambre secondaire, qui coïncide avec une extrémité axiale du tube 1. Ladite paroi plane 16 est également en un matériau polymérique qui est étanche au gaz et présente une température de perte des propriétés mécaniques supérieure à 120°C, tel que le PA6 ; elle réalise, selon l'invention, une paroi allégée d'extrémité de la chambre secondaire. La paroi d'extrémité 16 présente une épaisseur comprise entre 0,5 et 10 mm, et par exemple de l'ordre de 1 à 3 mm. Cette paroi est fixée au tube 1 par soudure (friction, laser, ultrasons, haute fréquence, lame chauffante...), collage, formage à chaud, mise en place en force, etc. (plusieurs techniques pouvant avantageusement être combinées) et de façon à obtenir une liaison étanche sur l'ensemble de la périphérie de la paroi d'extrémité 16 ;
- une grille 18 métallique plane de section circulaire, qui définit l'autre extrémité axiale de la chambre secondaire. Cette grille est insérée en force dans le tube 1 et est ainsi maintenue en position. Ladite grille 18 présente une lumière centrale 19 de section circulaire, dite ouverture d'entrée, par laquelle un jet primaire, expulsé de la chambre 3 par l'orifice d'expulsion 7, pénètre dans la chambre secondaire 14. La grille 18 présente également une pluralité de lumières 20, dite ouvertures d'évacuation, par lesquelles les gaz issus de la décomposition du composé secondaire sont évacués de la chambre secondaire. En l'exemple illustré, les ouvertures d'évacuation présentent une section circulaire et sont réparties sur deux cercles concentriques autour de l'ouverture d'entrée ;
- un premier tronçon 15 du tube 1 s'étendant entre la grille 18 et la paroi d'extrémité 16, et qui réalise, selon l'invention, une paroi allégée périphérique de ladite chambre secondaire.

La chambre secondaire renferme un composé secondaire 17, conditionné sous forme de poudre ou de granulés ou de pastilles à l'intérieur d'un sac étanche formé par un film ou un complexe de films, par exemple en matière plastique. Le composé secondaire comprend de préférence du nitrate d'ammonium et un additif à base de dérivés de guanidine (nitrate de guanidine, nitroguanidine...).

Le générateur de gaz selon le premier mode de réalisation (figure 1) comprend également une zone de stabilisation 22, qui s'étend entre la chambre primaire 3 et la chambre secondaire 14. Ladite zone de stabilisation est délimitée par :
- un deuxième tronçon 23 du tube 1, s'étendant entre la grille 18 et la plaque support 13 du système d'allumage 9. Ce tronçon 23 de tube forme une paroi allégée périphérique de la zone de stabilisation. Il est percé d'une pluralité de lumières 24, dites trous d'échappement, réparties tout autour du générateur de gaz sur une même section du tube 1, entre la grille 18 et la portion plane 6 de l'enceinte de la chambre primaire,
- l'enceinte 4 de la chambre primaire 3 de l'impulseur,
- la plaque support 13 de l'impulseur,
- la grille 18.

En fonctionnement, la combustion du composé primaire 8 génère un jet primaire qui détruit l'opercule obturant initialement l'orifice d'expulsion 7, traverse l'ouverture d'entrée 19, pénètre ainsi dans la chambre secondaire 14 et rompt instantanément le sac étanche 21. La formation de ce jet primaire est extrêmement rapide compte tenu de la vitesse de combustion élevée du composé primaire. L'énergie véhiculée par le jet primaire permet de brûler le composé secondaire 17. Les gaz issus de la décomposition du composé secondaire sont évacués de la chambre secondaire à contre-courant du jet primaire par les ouvertures d'évacuation 20. Les produits (gaz) de combustion du composé primaire sont oxydés par les gaz issus de la décomposition du composé secondaire. Cette réaction d'oxydoréduction, dite post-combustion, a lieu dans la zone de stabilisation et dans la chambre secondaire. L'ensemble des gaz générés (gaz issus de la combustion du composé primaire, gaz issus de la décomposition du composé secondaire et gaz issus de la post-combustion) s'échappe du générateur de gaz par les trous d'échappement 24, par exemple pour gonfler un coussin de sécurité d'un véhicule.

A noter que le sac étanche dans lequel est conditionné le composé secondaire peut être réalisé par un complexe aluminisé usuel (disponible dans le commerce à moindre coût) comportant un film central en aluminium d'environ 10 µm d'épaisseur. Le film en aluminium est apprécié pour ces propriétés de barrière d'étanchéité (et non pour ses propriétés thermiques). En aucun cas, le sac ne possède une fonction thermique ou mécanique dans le fonctionnement du générateur de gaz. Ce sac est entièrement détruit en fonctionnement, et ce quasiment instantanément dès que le jet primaire le frappe et pénètre dans la chambre secondaire. Ce sac ne fait pas partie de l'ossature de la chambre secondaire. Cette dernière comprend exclusivement le tronçon 15 du tube 1 et la paroi d'extrémité 16. En l'exemple, l'ossature de la chambre secondaire est par conséquent entièrement constituée de parois allégées selon l'invention.

A noter que l'ossature du générateur de gaz est constituée par, outre le tronçon 15 et la paroi 16 susmentionnés, le tronçon 23 du tube 1, la plaque support 13 et l'enceinte 4 de l'impulseur.

La figure 2 illustre un deuxième mode de réalisation d'un générateur de gaz selon l'invention, proche de celui précédemment décrit. En particulier, le générateur de gaz selon le deuxième mode de réalisation comprend un tube 101, identique ou similaire au tube 1 précédemment décrit, et un impulseur 102, identique ou similaire à l'impulseur 2. Seules les différences entre ces deux modes de réalisation sont détaillées ci-après.

Le générateur de gaz selon le deuxième de réalisation (figure 2) diffère du premier mode de réalisation (figure 1) en ce que le composé secondaire est conditionné dans une cartouche rigide 121. Cette cartouche est constituée par un corps de cartouche tubulaire globalement cylindrique 130, un fond 134 et un bouchon 131. Le corps de cartouche 130 et le fond 134 réalisent un récipient de réception du composé secondaire, lequel récipient est fermé par le bouchon 131. Le corps de cartouche 130 présente avantageusement un diamètre externe maximal très légèrement supérieur au diamètre interne du tube 101, de sorte que la cartouche est introduite en force dans le tube et est ainsi calée en position. Le bouchon 131 de la cartouche est constitué par une bague annulaire 132 et un film 133 (solidaire de ladite bague) formant un opercule. La bague 132 est adaptée pour pouvoir être introduite en force dans le corps de cartouche 130, par l'ouverture que délimite ledit corps à l'opposé du fond 134. Le corps de cartouche 130 présente un rétrécissement ou goulet 135, qui réalise une butée de positionnement et de calage du bouchon 131.

A l'instar du premier mode de réalisation (figure 1), le générateur selon le deuxième mode de réalisation (figure 2) possède une grille 118 percée d'ouverture d'entrée et d'ouvertures d'évacuation. Toutefois, le générateur illustré à la figure 2 diffère du générateur illustré à la figure 1 en ce que ladite grille est portée par la cartouche (et non par le tube). La grille 118 est en effet placée dans la cartouche 121, bloquée entre la bague 132 du bouchon de cartouche et le goulet 135 du corps de cartouche, contre l'opercule 133. La cartouche est ainsi utilisée à titre de support de la grille, en vue de simplifier la fabrication du générateur et notamment la mise en place et le calage de la grille. En outre, la cartouche forme un sous-ensemble facile à manipuler, dont l'intégration au sein du tube 101 est aisée. Le générateur obtenu est extrêmement simple à fabriquer : il suffit d'intégrer dans un tube extrudé, d'une part un impulseur 102 du commerce, et d'autre part une cartouche 121, puis de refermer l'extrémité du tube accueillant la cartouche par une paroi d'extrémité 116. Cette dernière étape peut même être supprimée si l'on utilise une cartouche dont le fond est adapté (et notamment suffisamment épais) pour réaliser la paroi d'extrémité. Dans ce dernier cas uniquement, le fond de la cartouche fait partie de l'ossature de la chambre secondaire.

Le générateur de gaz selon le deuxième mode de réalisation (figure 2) diffère également du premier mode de réalisation (figure 1) en ce que sa chambre secondaire 114 est délimitée, à son extrémité axiale opposée à la grille 118 (laquelle extrémité coïncide avec une extrémité axiale du tube 101), par une paroi d'extrémité 116 métallique. Bien entendu, cette paroi métallique pourrait être remplacée par une paroi allégée d'extrémité selon l'invention, entièrement en matériau(x) polymérique(s), ou par une paroi formée d'un disque en matériau(x) polymérique(s) doublé d'un bouclier thermique (métallique par exemple) au point d'impact du jet primaire, ou encore par le fond d'une cartouche comme précédemment expliqué.

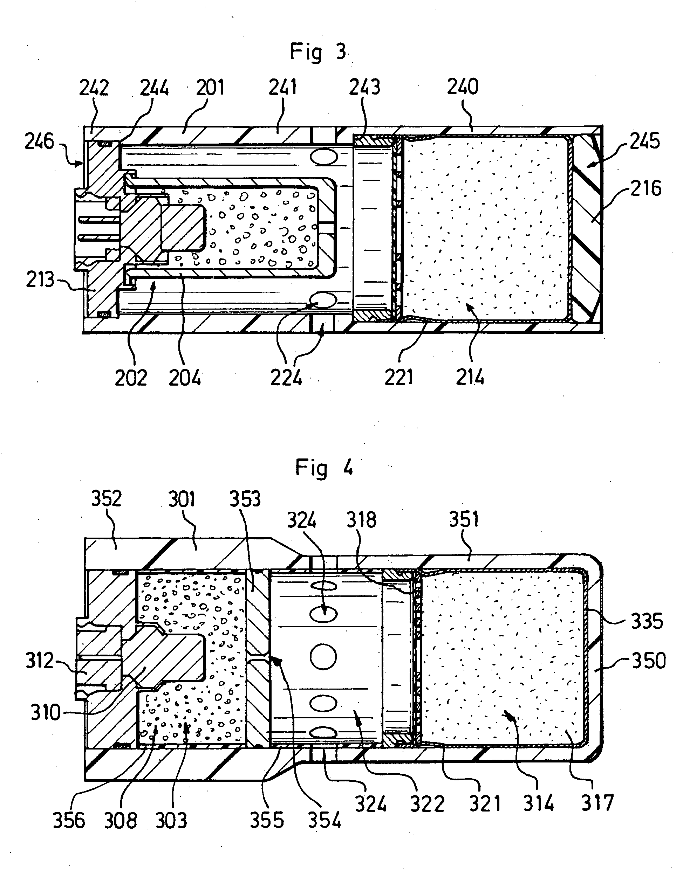

La figure 3 illustre un troisième mode de réalisation de l'invention qui diffère essentiellement du deuxième mode de réalisation (figure 2) en ce que le corps extérieur de ce générateur est formé par un tube 201 qui présente un diamètre externe constant mais une épaisseur variable. Ce tube 201 est réalisé par injection ou par tout autre procédé approprié (autre procédé de moulage, thermoformage, usinage en reprise, etc.). Il est constitué successivement (de la droite vers la gauche sur la figure 3) par :
- un premier tronçon 240 de plus faible épaisseur, qui s'étend approximativement sur une moitié de la longueur totale du tube, à partir de l'une de ses extrémités axiales 245. Ce premier tronçon 240 délimite la chambre secondaire 214 du générateur de gaz ; il réalise une paroi allégée périphérique de ladite chambre, qui s'étend sur la totalité de la longueur de la chambre. Ce tronçon 240 de tube présente un diamètre interne sensiblement égal ou légèrement supérieur au diamètre externe de la cartouche 221 contenant le composé secondaire,
- un deuxième tronçon 241 dont l'épaisseur est supérieure à celle du premier tronçon 240, et qui constitue la grande majorité de l'autre moitié du tube. Ce deuxième tronçon 241, percé de trous d'échappement, délimite la zone de stabilisation du générateur ; il réalise une paroi allégée périphérique de ladite zone de stabilisation, qui s'étend sur la totalité de la longueur de la zone,
- un troisième tronçon 242 de faible longueur, dont l'épaisseur est inférieure à celle du deuxième tronçon 241. Ce troisième tronçon 242 de tube présente un diamètre interne sensiblement égal au diamètre externe de la plaque support 213 de l'impulseur 202.

Ainsi, le tube présente deux épaulements internes : un premier épaulement interne 243 entre le premier tronçon 240 de tube et le deuxième tronçon 241 de tube, et un second épaulement interne 244 entre le deuxième tronçon 241 de tube et le troisième tronçon 242 de tube. L'épaulement interne 243 forme une butée axiale de positionnement et de calage de la cartouche rigide 221. La distance entre cet épaulement 243 et le bord de l'extrémité axiale 245 du tube est choisie de façon à correspondre sensiblement à la somme de la longueur totale de la cartouche 221 et de l'épaisseur de la paroi d'extrémité 216 (paroi fermant hermétiquement l'extrémité axiale 245). Ainsi, ladite cartouche est bloquée en position dans le tube par l'épaulement 243 d'une part et par la paroi 216 d'autre part. A noter que cette paroi 216 est, en l'exemple illustré, en matériau(x) polymérique(s) et réalise une paroi allégée d'extrémité de la chambre secondaire.

L'épaulement interne 244 forme une butée axiale de positionnement et de calage de l'impulseur 202. L'impulseur est introduit dans le tube 201 par l'extrémité axiale 246 dudit tube, jusqu'à ce que la plaque support 213 du système d'allumage dudit impulseur vienne en butée contre l'épaulement 244. Ladite plaque support est fixée au tube 201 dans cette position, par tout moyen apte à réaliser une liaison étanche.

Il est à noter que, comparé au deuxième mode de réalisation (figure 2), la distance séparant l'impulseur 202 et la cartouche 221 du générateur de gaz selon le troisième mode de réalisation (figure 3) a été raccourcie, en vue de diminuer la longueur totale du générateur de gaz et d'obtenir ainsi un générateur plus compact. Les trous d'échappement 224 du générateur s'étendent en regard de l'enceinte 204 de l'impulseur 202, et notamment en regard de la portion plane 206 de cette enceinte.

La figure 4 illustre un quatrième mode de réalisation d'un générateur selon l'invention, dont l'ossature comprend essentiellement un tube 301 en matériau(x) polymérique(s), fermé à l'une de ses extrémités axiales par un fond plat 350. Le tube 301 présente un diamètre interne constant, mais un diamètre externe et une épaisseur variables. Un tel tube est obtenu par injection ou par tout autre procédé approprié. Ce tube 301 comprend, outre le fond 350 :
- un premier tronçon cylindrique 351 de section circulaire, qui présente une faible épaisseur, par exemple de 2 mm et en tout état de cause inférieur à 10 mm (de préférence compris entre 0,5 et 5 mm). Ce premier tronçon cylindrique 351 s'étend approximativement sur une moitié de la longueur totale du tube, à partir du fond 350. Il délimite successivement une chambre secondaire 314 et une zone de stabilisation 322. Le fond 350 réalise une paroi allégée d'extrémité de la chambre secondaire 314. Le tronçon cylindrique 351 forme successivement une paroi allégée périphérique de ladite chambre secondaire, qui s'étend sur toute la longueur de cette chambre, et une paroi allégée périphérique de la zone de stabilisation, qui s'étend de même sur toute la longueur de ladite zone.
- un second tronçon cylindrique 352 de section circulaire, qui présente une épaisseur plus importante, et par conséquent un diamètre externe supérieur au diamètre externe du premier tronçon cylindrique 351. Le second tronçon 352 délimite une chambre primaire 303 contenant un composé pyrotechnique primaire 308. La chambre primaire 303 est par ailleurs délimitée axialement par une cloison épaisse 353, décrite plus loin, et un système d'allumage 309, dont la plaque support 313 obture l'ouverture délimitée par l'extrémité axiale 346 du tube (extrémité axiale opposée au fond 350). Ladite plaque support 313 est scellée de façon hermétique au tube 301, comme précédemment expliqué. Le système d'allumage comprend par ailleurs une charge pyrotechnique 310 renforcée et un connecteur électrique 312 L'épaisseur du second tronçon cylindrique 352 du tube est adaptée pour permettre à ce tronçon de résister à la pression générée par la combustion du composé primaire dans la chambre primaire 303. Elle est comprise entre 1 et 10 mm, de préférence entre 3 et 6 mm. En l'exemple illustré, l'épaisseur dudit deuxième tronçon 352 est de l'ordre de 5 mm.

Le générateur de gaz selon le quatrième mode de réalisation (figure 4) comprend également une cloison épaisse 353 (mentionnée plus haut) en acier, qui s'étend à l'intérieur du tube 301 orthogonalement à la direction axiale du générateur. Cette cloison 353 sépare la chambre primaire 303 et la zone de stabilisation 322. Elle est percée, en une zone centrale, d'une tuyère 354 (comprenant successivement un conduit convergent, un conduit cylindrique et un conduit divergent), laquelle tuyère forme un orifice d'expulsion des gaz de la chambre primaire.

Le générateur de gaz selon le quatrième mode de réalisation (figure 4) comprend de plus une cartouche 321, contenant un composé secondaire 317 et supportant une grille 318 comme précédemment expliqué (laquelle grille présente une ouverture d'entrée 319 centrale et des ouvertures d'évacuation 320 périphériques). A noter que la grille 318 matérialise la limite entre la chambre secondaire et la zone de stabilisation. La cartouche 321, qui présente un diamètre externe sensiblement égal ou de préférence légèrement inférieur au diamètre interne du tube 301, est placée dans le tube de telle sorte que le fond 335 de ladite cartouche s'applique contre le fond 350 dudit tube. Une première entretoise 355 d'espacement, intercalée entre la cartouche 321 et la cloison 353, permet de maintenir la cartouche dans cette position. La cloison 353 est de préférence scellée au tube. En variante ou en combinaison, une seconde entretoise 356 d'espacement est intercalée entre ladite cloison 353 et la plaque support 313 du système d'allumage 309, en vue de bloquer axialement la cloison 353.

A noter que la première entretoise 355 est percée de lumières en regard des trous d'échappement 324 ménagés dans le tube 301, en vue de permettre la libération des gaz générés.

Les entretoises 355 et 356 peuvent être en un matériau métallique ou polymérique. En effet, les conditions (relativement modérées) de température et de pression auxquelles est soumise l'entretoise 355 (dans la zone de stabilisation) sont compatibles avec la réalisation de cette entretoise en un matériau polymérique (étant rappelé qu'aucune braise n'est générée ni par la combustion du composé primaire ni par la décomposition du composé secondaire). Par ailleurs, la vitesse de combustion du composé primaire est telle que le très faible temps de contact entre le composé en combustion et l'entretoise 356 n'entraîne pas la fusion de cette dernière ; de plus, l'entretoise 356 est contenue radialement par le tronçon de tube 352, qui est apte à résister à la pression élevée générée par la combustion du composé primaire.

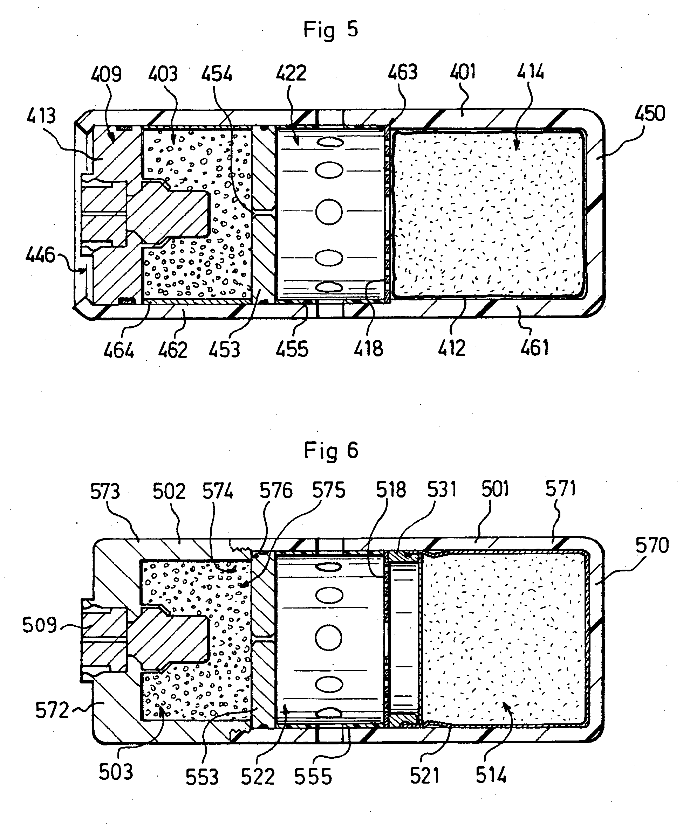

La figure 5 illustre un cinquième mode de réalisation d'un générateur de gaz selon l'invention, qui comprend un tube 401 en matériau(x) polymérique(s), de diamètre externe constant. Ledit tube comprend successivement :
- un fond 450, qui réalise une paroi allégée d'extrémité d'une chambre secondaire 414,
- un premier tronçon cylindrique 461 qui réalise une paroi allégée périphérique de la chambre secondaire 414 s'étendant sur toute la longueur de ladite chambre ; à noter que, à l'instar du premier mode de réalisation (figure 1), le composé secondaire stocké dans la chambre secondaire 414 est conditionné dans un sac étanche 421 ;
- un second tronçon cylindrique 462, qui s'étend jusqu'à l'extrémité axiale 446 (opposée au fond 450) dudit tube et renferme successivement une zone de stabilisation 422 et une chambre primaire 403. Ledit second tronçon cylindrique 462 présente un diamètre interne légèrement supérieur au diamètre interne du premier tronçon 461, de sorte qu'un épaulement interne 463 apparaît entre les deux tronçons.

L'épaulement interne 463 fait office de butée axiale pour une grille 418 (par exemple similaire à la grille 18) séparant la chambre secondaire 414 et la zone de stabilisation 422. La grille est maintenue en position, sur son autre face, par une entretoise 455 d'espacement. Une cloison épaisse métallique 453, percée d'un orifice d'expulsion 454 en forme de tuyère, sépare la chambre primaire 403 et la zone de stabilisation 422, à l'instar du quatrième mode de réalisation (figure 4). En revanche, contrairement audit quatrième mode de réalisation, l'ossature de la chambre primaire 403 du générateur selon le cinquième mode de réalisation est constituée, non seulement par une partie du tube 401, mais de plus par une garniture interne 464 de renfort, en métal. Cette garniture de renfort 464 participe à la résistance à la pression de la chambre primaire. Elle réalise également, de façon secondaire, une entretoise d'espacement entre la cloison 453 et la plaque support 413 du système d'allumage 409.

A noter que la liaison entre la plaque support 413 du système d'allumage et le tube 401 est ici réalisée ou renforcée par sertissage de l'extrémité axiale 446 dudit tube.

La figure 6 illustre un sixième mode de réalisation d'un générateur de gaz selon l'invention, comprenant un premier tube 501 en matériau(x) polymérique(s), d'épaisseur constante comprise de préférence entre 0,5 et 5 mm (par exemple de l'ordre de 2 mm), et qui réalise l'ossature d'une chambre secondaire 514 et d'une zone de stabilisation 522. Le tube 501 présente à cette fin un fond plat 570 formant une paroi allégée d'extrémité de la chambre secondaire 514, et une partie cylindrique 571 formant successivement des parois périphériques allégées de la chambre secondaire et de la zone de stabilisation. La chambre secondaire 514 renferme une cartouche rigide 521 contenant un composé secondaire. Une grille 518, similaire à la grille 18, s'étend contre le bouchon 531 de ladite cartouche. Une entretoise 555 est intercalée entre la grille 518 et une cloison épaisse métallique 553 (similaire à la cloison 353 précédemment décrite), en vue de maintenir d'une part la grille 518 appliquée contre le bouchon 531, et d'autre part la cartouche 521 appliquée contre le fond 570 du tube. A noter que la grille 518 pourrait, en variante, être portée par la cartouche comme précédemment expliqué.

Le générateur de gaz selon le sixième mode de réalisation (figure 6) comprend de plus un deuxième tube 502 métallique, d'épaisseur constante comprise entre 1 et 5 mm, de préférence entre 2 et 3 mm, par exemple de l'ordre de 2,5 mm. Ce deuxième tube 502 réalise l'ossature d'une chambre primaire 503. Le tube 502 est constitué d'un fond plat 572, qui supporte directement un système d'allumage 509 (le connecteur électrique du système d'allumage traverse le fond 572), et d'une partie cylindrique 573.

Les deux tubes 501 et 502 sont assemblés entre eux par leur extrémité axiale 574 et 575 respective (extrémités opposées aux fonds 570 et 572) ; ils s'étendent coaxialement dans le prolongement l'un de l'autre. L'assemblage est obtenu par tout procédé (soudure, collage, ancrage mécanique et combinaison de ces procédés) apte à fournir une liaison résistante et étanche au gaz entre les deux tubes. Les tubes présentent des diamètres externes sensiblement égaux ; assemblés, ils forment par conséquent un corps de générateur extérieurement cylindrique. En revanche, le tube métallique 502, plus épais, présente un diamètre interne inférieur au diamètre interne du tube polymérique 501, de sorte qu'un épaulement interne apparaît à la jonction entre les tubes. Cet épaulement sert de butée axiale à la cloison 553 et permet ainsi de caler l'ensemble cloison 553, entretoise 555, grille 518 et cartouche 521 dans le tube 501.

Il va de soi que l'invention peut faire l'objet de nombreuses variantes par rapport aux modes de réalisation décrits et illustrés.

En particulier, le générateur de gaz selon l'invention peut présenter une forme générale de palet ou galette, c'est-à-dire une forme de tronc de cylindre dont la longueur est inférieure au diamètre. Dans ce cas, la chambre primaire présente une forme générale cylindrique et est avantageusement située dans une zone centrale du générateur, l'axe de la chambre primaire coïncidant avec l'axe du générateur. Dans la première version de l'invention, cette chambre primaire centrale est entourée d'une zone de stabilisation annulaire, elle-même entourée d'une chambre secondaire annulaire. Dans la deuxième version de l'invention, la chambre primaire centrale est entourée d'une chambre secondaire annulaire, elle-même entourée d'une zone de stabilisation annulaire. L'enceinte délimitant la chambre primaire présente une pluralité d'orifices d'expulsion répartis sur la périphérie de la chambre, de préférence dans une même section de celle-ci, par lesquels sont délivrés des jets primaires radiaux qui pénètrent dans la chambre secondaire. Par exemple, la chambre primaire est pourvue de quatre orifices d'expulsion, diamétralement opposés deux à deux. L'ossature en forme de galette du générateur comprend principalement une paroi cylindrique et deux parois planes fermant les extrémités axiales de la paroi cylindrique. Toutes ces parois sont avantageusement des parois allégées selon l'invention, c'est-à-dire notamment des parois en matériau(x) polymérique(s), de préférence d'épaisseur comprise entre 1 et 5 mm. Si nécessaire, l'enceinte délimitant la chambre primaire est métallique et/ou renforcée.

## Revendications

1. Dispositif de génération de gaz, dit générateur de gaz, comprenant :
- une ossature apte à conserver son intégrité dans des conditions normales de fonctionnement et à garantir une régulation de la libération des gaz générés, ladite ossature formant au moins :
▪ une chambre (3 ; 303), dite chambre primaire, de stockage et de combustion d'un composé pyrotechnique (8 ; 308) dit composé primaire, ladite chambre primaire présentant au moins un orifice (7 ; 354) dit orifice d'expulsion,
▪ une autre chambre (14 ; 314), dite chambre secondaire, de stockage et de décomposition d'un composé (17 ; 317) dit composé secondaire, les composés primaire et secondaire formant une charge explosible du générateur de gaz, les composés primaire et secondaire étant adaptés pour que le composé secondaire puisse être décomposé par des produits de combustion du composé primaire, ladite chambre secondaire présentant, en fonctionnement, au moins une ouverture (19 ; 319), dite ouverture d'entrée, par laquelle peuvent pénétrer les produits de combustion du composé primaire, en formant un jet, dit jet primaire,
▪ au moins une zone (22 ; 322) dite zone de stabilisation, qui, en fonctionnement, communique au moins :
- avec la chambre secondaire par au moins une ouverture (20 ; 320) dite ouverture d'évacuation,
- avec l'extérieur du générateur de gaz par des trous (24 ; 324) d'échappement des gaz générés,
- un ensemble (9 ; 309) dit système d'allumage, au moins partiellement inséré dans la chambre primaire, comprenant un connecteur (12 ; 312)
pour la réception d'une charge électrique, un filament, une charge initiatrice et une charge renforçatrice et adapté pour amorcer la combustion du composé primaire à réception d'une charge électrique prédéterminée, transmise par ce connecteur,
tel que :
- la partie d'ossature formant la chambre secondaire (14 ; 314) comprend au moins une paroi (15, 16 ; 350, 351.), dite paroi allégée de la chambre secondaire, réalisant une interface entre l'intérieur de la chambre secondaire et l'extérieur du générateur de gaz,
- chaque paroi allégée de la chambre secondaire est en au moins un matériau polymérique solide étanche au gaz, le(s)dit(s) matériau(x) polymérique(s) étant adapté(s) pour former une(des) paroi(s) allégée(s) présentant une température, dite température de perte des propriétés mécaniques, supérieure à 120°C et possédant des caractéristiques mécaniques telles que la chambre secondaire présente un volume interne dont la valeur en fonctionnement est inférieure à quatre fois sa valeur au repos, **caracterisé en ce que** - la zone de stabilisation (22 ; 322) s'étend entre la chambre primaire (3; 303) et la chambre secondaire (14 ; 314), ladite zone de stabilisation communiquant avec la chambre primaire par le(s) orifice(s) d'expulsion et avec la chambre secondaire par la(les) ouverture(s) d'entrée.

2. Dispositif selon la revendication 1, **caractérisé en ce que** chaque matériau polymérique présente une température de perte des propriétés mécaniques inférieure à 300°C.

3. Dispositif selon l'une des revendications 1 ou 2, **caractérisé en ce qu'**il contient une quantité de charge explosible supérieure à 2,5 grammes.

4. Dispositif selon la revendication 3, **caractérisé en ce qu'**il contient une quantité de charge explosible supérieure à 10 grammes.

5. Dispositif selon l'une des revendications 1 à 4, **caractérisé en ce qu'**il est adapté pour présenter une durée de fonctionnement supérieure à 15 ms.

6. Dispositif selon l'une des revendications 1 à 5, **caractérisé en ce que** chaque paroi allégée (15, 16 ; 350, 351) de la chambre secondaire présente une épaisseur maximale comprise entre 1 et 3 mm.

7. Dispositif selon l'une des revendications 1 à 6, **caractérisé en ce que** la partie d'ossature formant la zone de stabilisation (22 ; 322) comprend au moins une paroi (23 ; 351), dite paroi allégée de la zone de stabilisation, réalisant une interface entre l'intérieur de la zone de stabilisation et l'extérieur du générateur de gaz, au moins une partie des trous d'échappement (24 ; 324) étant ménagés dans au moins une paroi allégée de la zone de stabilisation, chaque paroi allégée de la zone de stabilisation étant en au moins un matériau polymérique solide étanche au gaz, le(s)dit(s) matériau(x) polymérique(s) étant adapté(s) pour former une(des) paroi(s) allégée(s) présentant une température de perte des propriétés mécaniques supérieure à 120°C et possédant des caractéristiques mécaniques telles que la zone de stabilisation présente un volume interne dont la valeur en fonctionnement est inférieure à quatre fois sa valeur au repos.

8. Dispositif selon la revendication 7, **caractérisé en ce que** chaque paroi allégée (23 ; 351) de la zone de stabilisation présente une épaisseur maximale comprise entre 1 et 3 mm.

9. Dispositif selon l'une des revendications 1 à 8, présentant une forme générale globalement cylindrique allongée, et dans lequel la chambre primaire, la zone de stabilisation et la chambre secondaire se succèdent selon une direction axiale du générateur de gaz, **caractérisé en ce que** la partie d'ossature formant la chambre secondaire comprend une paroi allégée (15 ; 351), dite paroi allégée périphérique de la chambre secondaire, cylindrique s'étendant sur la totalité d'une dimension, dite longueur, de ladite chambre secondaire selon la direction axiale du générateur de gaz.

10. Dispositif selon l'une des revendications 1 à 9 et selon la revendication 7, présentant une forme générale globalement cylindrique allongée, et dans lequel la chambre primaire, la zone de stabilisation et la chambre secondaire se succèdent selon une direction axiale du générateur de gaz, **caractérisé en ce que** la partie d'ossature formant la zone de stabilisation comprend une paroi allégée (23 ; 351), dite paroi allégée périphérique de la zone de stabilisation, cylindrique s'étendant sur la totalité d'une dimension, dite longueur, de ladite zone de stabilisation selon la direction axiale du générateur de gaz.

11. Dispositif selon les revendications 9 et 10, **caractérisé en ce que** les parois allégées périphériques de la chambre secondaire et de la zone de stabilisation sont formées par un même tube (1 ; 301).

12. Dispositif selon l'une des revendications 1 à 11, présentant une forme générale globalement cylindrique allongée, et dans lequel la chambre primaire, la zone de stabilisation et la chambre secondaire se succèdent dans cet ordre selon une direction axiale du générateur de gaz, **caractérisé en ce que** la partie d'ossature formant la chambre secondaire comprend une paroi allégée (16 ; 350), dite paroi allégée d'extrémité de la chambre secondaire, fermant une extrémité axiale de ladite chambre secondaire.

13. Dispositif selon l'une des revendications 1 à 12, présentant une forme générale globalement cylindrique allongée, **caractérisé en ce qu'**il présente un diamètre externe maximal inférieur ou égal à 25 mm.

14. Dispositif selon l'une des revendications 1 à 13, **caractérisé en ce que** chaque paroi allégée de la chambre secondaire et, le cas échéant, de la zone de stabilisation est en un ou plusieurs matériau(x) polymérique(s) choisi(s) parmi :
- les matériaux polymériques thermodurcissables, les matériaux polymériques thermoplastiques, les élastomères,
- les matériaux polymériques rigides, les matériaux polymériques souples, les matériaux polymériques élastiques,
- les mousses,
- les matériaux polymériques synthétiques, les matériaux polymériques naturels, les matériaux polymériques artificiels,
- les matériaux polymériques homogènes, les matériaux polymériques stratifiés, les matériaux polymériques renforcés par des fibres de carbone ou de verre ou des fibres polymériques,
- les homopolymères, les copolymères, les alliages de polymères, les polymères interpénétrés,
- les polyamides, les polyoléfines, les polymères vinyliques, les polymères styréniques, les polyesters, les polymères acryliques, les polyuréthannes, les phénoplastes, les époxydes, l'EPDM, les polycarbonates, les polyacrilonitriles, les silicones, les latex,
- les matériaux polymériques améliorés par un ou plusieurs additifs choisis parmi les charges minérales, les charges végétales, les plastifiants, les stabilisants, les colorants.

15. Dispositif selon l'une des revendications 1 à 14, **caractérisé en ce que** le composé secondaire, stocké dans la chambre secondaire, est conditionné dans un sac souple étanche (12) ou dans une cartouche rigide (321).

## Patentansprüche

1. Gasgenerationsvorrichtung, bezeichnet als Gasgenerator, umfassend:
- eine Konstruktion, die geeignet ist, ihre Integrität unter normalen Betriebsbedingungen zu bewahren und eine Regulierung der Freisetzung der generierten Gase zu garantieren, wobei die genannte Konstruktion wenigstens bildet:
• eine Kammer (3; 303), bezeichnet als primäre Kammer zur Lagerung und Verbrennung einer pyrotechnischen Verbindung (8; 308), bezeichnet als primäre Verbindung, wobei die genannte primäre Kammer wenigstens eine Öffnung (7; 354) aufweist, bezeichnet als Ausstoßöffnung,
• eine andere Kammer (14; 314), bezeichnet als sekundäre Kammer, zur Lagerung und Zersetzung einer Verbindung (17; 317), bezeichnet als sekundäre Verbindung, wobei die primären und sekundären Verbindungen eine explosionsfähige Charge des Gasgenerators bilden, wobei die primären und sekundären Verbindungen angepasst sind, damit die sekundäre Verbindung von Verbrennungsprodukten der primären Verbindung zersetzt werden können, wobei die genannte sekundäre Kammer im Betrieb wenigstens eine Apertur (19; 319) aufweist, bezeichnet als Eingangsapertur, durch die die Verbrennungsprodukte der primären Verbindung hindurch dringen können, indem sie einen Strahl bilden, bezeichnet als primärer Strahl,
• wenigstens einen Bereich (22; 322), bezeichnet als Stabilisierungsbereich, der im Betrieb wenigstens kommuniziert:
- mit der sekundären Kammer durch wenigstens eine Apertur (20; 320), bezeichnet als Austragsapertur,
- mit der Außenseite des Gasgenerators durch Freisetzungslöcher (24; 324) der generierten Gase,
- mit einer Struktur (9; 309), bezeichnet als Zündsystem, die wenigstens teilweise in die primäre Kammer eingeführt ist, umfassend ein Anschlussstück (12; 312) für die Aufnahme einer elektrischen Kammer, eines Glühdrahtes, einer auslösenden Charge und einer Verstärkungscharge und die angepasst ist, um die Verbrennung der primären Verbindung beim Empfang einer vorbestimmten elektrischen Charge zu initiieren, die von diesem Anschlussstück übertragen wird, derartig, dass:
- der die sekundäre Kammer (14; 314) bildende Konstruktionsteil wenigstens eine Wand (15, 16; 350, 351) umfasst, bezeichnet als erleichterte Wand der sekundären Kammer, die eine Schnittstelle zwischen dem Innern der sekundären Kammer und dem Äußeren des Gasgenerators realisiert,
- jede erleichterte Wand der sekundären Kammer wenigstens aus einem gasdichten, soliden, polymerischen Material besteht, wobei das (die) polymerische(n) Material(ein) angepasst ist (sind), um eine (mehrere) erleichterte Wand (Wände) zu bilden, die eine Temperatur aufweist (aufweisen), bezeichnet als Verlusttemperatur der mechanischen Eigenschaften, die höher ist als 120° C und mechanische Eigenschaften derart besitzt (besitzen), dass die sekundäre Kammer ein internes Volumen aufweist, dessen Wert im Betrieb niedriger ist als das Vierfache seines Wertes bei Stillstand, **dadurch gekennzeichnet, dass** der Stabilisierungsbereich (22; 322) sich zwischen der primären Kammer (3; 303) und der sekundären Kammer (14; 314) erstreckt, wobei der genannte Stabilisierungsbereich mit der primären Kammer durch die Ausstoßapertur(en) und mit der sekundären Kammer durch die Eingangsapertur(en) kommuniziert.

2. Vorrichtung gemäß Anspruch 1, **dadurch gekennzeichnet, dass** jedes polymerische Material eine Verlusttemperatur der mechanischen Eigenschaften von weniger als 300° C aufweist.

3. Vorrichtung gemäß Anspruch 1 oder 2, **dadurch gekennzeichnet, dass** sie eine explosionsfähige Chargenmenge von mehr als 2,5 Gramm enthält.

4. Vorrichtung gemäß Anspruch 3, **dadurch gekennzeichnet, dass** sie eine explosionsfähige Chargenmenge von mehr als 10 Gramm enthält.

5. Vorrichtung gemäß Anspruch 1 bis 4, **dadurch gekennzeichnet, dass** sie angepasst ist, um eine Betriebsdauer von mehr als 15 mSek. aufzuweisen.

6. Vorrichtung gemäß Anspruch 1 bis 5, **dadurch gekennzeichnet, dass** jede erleichterte Wand (15, 16; 350, 351) der sekundären Kammer eine zwischen 1 und 3 mm inbegriffene maximale Dicke aufweist.

7. Vorrichtung gemäß Anspruch 1 bis 6, **dadurch gekennzeichnet, dass** der den Stabilisierungsbereich (22; 322) bildende Konstruktionsteil wenigstens eine Wand (23; 351) umfasst, bezeichnet als erleichterte Wand des Stabilisierungsbereichs, der eine Schnittstelle zwischen dem Innern des Stabilisierungsbereichs und dem Äußeren des Gasgenerators realisiert, wobei wenigstens ein Teil der Freisetzungslöcher (24; 324) in wenigstens einer erleichterten Wand des Stabilisierungsbereichs ausgespart ist, wobei jede erleichterte Wand des Stabilisierungsbereichs wenigstens aus einem gasdichten, soliden polymerischen Material ist, wobei das (die) genannte (n) polymerische Material(ein) geeignet ist (sind), um eine (mehrere) erleichterte Wand (Wände) zu bilden, die eine Verlusttemperatur der mechanischen Eigenschaften von mehr als 120° C aufweist (aufweisen) und mechanische Eigenschaften derart besitzt (besitzen), dass der Stabilisierungsbereich ein internes Volumen aufweist, dessen Wert im Betrieb um das Vierfache seines Wertes im Stillstand niedriger ist.

8. Vorrichtung gemäß Anspruch 7, **dadurch gekennzeichnet, dass** jede erleichterte Wand (23; 351) des Stabilisierungsbereichs eine zwischen 1 und 3 mm inbegriffene maximale Dicke aufweist.

9. Vorrichtung gemäß Anspruch 1 bis 8, die eine allgemeine, global zylindrische, verlängerte Form aufweist und in der die primäre Kammer, der Stabilisierungsbereich und die sekundäre Kammer gemäß einer axialen Richtung des Gasgenerators aufeinander folgen, **dadurch gekennzeichnet, dass** der die sekundäre Kammer bildende Konstruktionsteil eine erleichterte Wand (15; 351) umfasst, bezeichnet als umlaufende peripherische Wand der sekundären zylindrischen Kammer, die sich über die Gesamtheit einer Abmessung, bezeichnet als Länge, der genannten sekundären Kammer gemäß der axialen Richtung des Gasgenerators erstreckt.

10. Vorrichtung gemäß Anspruch 1 bis 9 und gemäß Anspruch 7, die eine allgemeine, globale zylindrisch verlängerte Form aufweist und in der die primäre Kammer, der Stabilisierungsbereich und die sekundäre Kammer gemäß einer axialen Richtung des Gasgenerators aufeinander folgen, **dadurch gekennzeichnet, dass** der den Stabilisierungsbereich bildende Konstruktionsteil eine erleichterte Wand (23; 351) aufweist, bezeichnet als umlaufende peripherische erleichterte Wand des zylindrischen Stabilisierungsbereichs, der sich über die Gesamtheit einer Abmessung, bezeichnet als Länge, des genannten Stabilisierungsbereichs gemäß der axialen Richtung des Gasgenerators erstreckt.

11. Vorrichtung gemäß Anspruch 9 und 10, **dadurch gekennzeichnet, dass** die umlaufenden erleichterten Wände der sekundären Kammer und des Stabilisierungsbereichs durch eine und dieselbe Röhre (1; 301) gebildet sind.

12. Vorrichtung gemäß Anspruch 1 bis 11, die eine allgemeine, global zylindrische, verlängerte Form aufweist und in der die primäre Kammer, der Stabilisierungsbereich und die sekundäre Kammer in dieser Reihenfolge gemäß einer axialen Richtung des Gasgenerators aufeinander folgen, **dadurch gekennzeichnet, dass** der die sekundäre Kammer bildende Konstruktionsteil eine erleichterte Wand (16; 350) umfasst, bezeichnet als erleichterte Endwand der sekundären Kammer, die ein axiales Ende der genannten sekundären Kammer schließt.

13. Vorrichtung gemäß Anspruch 1 bis 12, die eine allgemeine, global zylindrische, verlängerte Form aufweist, **dadurch gekennzeichnet, dass** sie einen maximalen Außendurchmesser von weniger als oder gleich 25 mm aufweist.

14. Vorrichtung gemäß Anspruch 1 bis 13, **dadurch gekennzeichnet, dass** jede erleichterte Wand der sekundären Kammer und ggf. des Stabilisierungsbereichs aus einem oder mehreren polymerischen Material(ein) besteht, das (die) ausgewählt ist (sind) aus:
- wärmeaushärtenden polymerischen Materialien, thermoplastischen polymerischen Materialien, Elastomeren,
- steifen polymerischen Materialien, weichen polymerischen Materialien, elastischen polymerischen Materialien,
- Schaumstoffen,
- synthetischen polymerischen Materialien, natürlichen polymerischen Materialien, künstlichen polymerischen Materialien,
- homogenen polymerischen Materialien, schichtförmigen polymerischen Materialien, durch Karbon- oder Glasfasern oder polymerische Fasern verstärkten polymerischen Materialien,
- Homopolymeren, Kopolymeren, Polymerlegierungen, verflochtenen Polymeren,
- Polyamide, Polyolefine, Vinyl-Polymere, StyrolPolymere, Polyester, Acryl-Polyester, Polyurethane, Phenoplaste, Epoxide, EPDM, Polykarbonate, Polyacrilnitrile, Silikone, Latex,
- polymerischen Materialien, die durch einen oder mehrere Zusatz (Zusätze) verbessert sind, die aus mineralischen Chargen, pflanzlichen Chargen, Weichmachern, Stabilisatoren, Farbstoffen ausgewählt sind.

15. Vorrichtung gemäß Anspruch 1 bis 14, **dadurch gekennzeichnet, dass** die in der sekundären Kammer gelagerte sekundäre Verbindung in einem abgedichteten weichen Beutel (12) oder in einer steifen Kartusche (321) verpackt ist.

## Claims

1. A gas generating device, also called a gas generator comprising:
- a frame adapted to maintain its integrity under normal operating conditions and to ensure a regulation of the release of the generated gases, with said frame forming at least:
• a chamber (3; 303), so-called the primary chamber, for the storage and the combustion of a pyrotechnic compound (8; 308) so-called the primary compound, with said primary chamber having at least one opening (7; 354) so-called the outlet opening,
• another chamber (14; 314), so-called the secondary chamber, for the storage and the decomposition of a compound (17; 317) so-called the secondary compound, with the primary and secondary compounds forming a potentially explosive charge of the gas generator, with the primary and secondary compounds being so adapted that the secondary compound can be decomposed by products of combustion of the primary compound, with said secondary chamber having, in operation, at least one opening (19; 319), so-called the inlet opening, through which the products of combustion of the primary compound can enter, while forming a jet, so-called the primary jet,
• at least one zone (22; 322) so-called the stabilization zone, which, in operation, communicates at least with:
- the second chamber through at least one opening (20; 320) so-called the discharge opening,
- the outside of the gas generator through holes (24; 324) for the exhaust of the generated gases,
- an assembly (9; 309), so-called the ignition system, at least partially inserted into the primary chamber, comprising a connector (12; 312) for receiving an electric charge, a filament, an initial charge and a reinforcing charge and adapted to initiate the combustion of the primary compound upon receiving a predetermined electric charge, transmitted by said connector, so that:
- the frame part forming the secondary chamber (14; 314) comprises at least one wall (15, 16; 350, 351), so-called the light-weight wall of the secondary chamber, providing an interface between the inside of the secondary chamber and the outside of the gas generator,
- each light-weight wall of the secondary chamber and is made of at least one solid gas-tight polymeric material, with said polymeric material(s) being adapted to form a (the) light-weight wall(s) having a temperature, so-called the temperature of loss of mechanical properties, above 120°C and having mechanical characteristics such that the secondary chamber has an internal volume the value of which in operation is less than four times its value at rest, **characterized in that** the stabilization zone (22; 322) extends between the primary chamber (3; 303) and the secondary chamber (14; 314), with said stabilization zone communicating with the primary chamber through the discharge hole(s) and with the secondary chamber through the inlet opening(s).

2. A device according to claim 1, **characterized in that** each polymeric material has a temperature of loss of mechanical properties of less than 300°C.

3. A device according to one of claims 1 or 2, **characterized in that** it contains a quantity of potentially explosive charge of more than 2.5 grams.

4. A device according to claim 3, **characterized in that** it contains a quantity of potentially explosive charge of more than 10 grams.

5. A device according to one of claims 1 to 4, **characterized in that** it is adapted to have an operating time exceeding 15ms.

6. A device according to one of claims 1 to 5, **characterized in that** each light-weight wall (15, 16; 350, 351) of the secondary chamber has a maximum thickness ranging from 1 to 3mm.

7. A device according to one of claims 1 to 6, **characterized in that** the frame part forming the stabilization zone (22; 322) comprises at least one wall (23; 351), so-called the light-weight wall of the stabilization zone, providing an interface between the inside of the stabilization zone and the outside of the gas generator, with at least a part of the exhaust holes (24; 324) being provided in at least one light-weight wall of the stabilization zone, with each light-weight wall of the stabilization zone being made of at least one solid gas-tight polymeric material, with said polymeric material(s) being adapted to form a (the) light-weight wall(s) having a temperature of loss of mechanical properties above 120°C and having mechanical characteristics such that the stabilization zone has an internal volume the value of which in operation is less than four times its value at rest.

8. A device according to claim 7, **characterized in that** each light-weight wall (23; 351) of the stabilization zone has a maximum thickness ranging from 1 to 3mm.

9. A device according to one of claims 1 to 8, having a globally elongated general cylindrical shape, and wherein the primary chamber, the stabilization zone and the secondary chamber are positioned successively along an axial direction of the gas generator, **characterized in that** the frame part forming the secondary chamber comprises a light-weight wall (15; 351), so-called the cylindrical light-weight peripheral wall of the secondary chamber, extending over one whole dimension, so-called the length, of said secondary chamber along the axial direction of the gas generator.

10. A device according to one of claims 1 to 9 and according to claim 7, having a globally elongated general cylindrical shape, and wherein the primary chamber, the stabilization zone and the secondary chamber are positioned successively along an axial direction of the gas generator, **characterized in that** the frame part forming the stabilization zone comprises a light-weight wall (23; 351), so-called the cylindrical light-weight peripheral wall of the stabilization zone, extending over one whole dimension, so-called the length, of said stabilization zone along the axial direction of the gas generator.

11. A device according to claims 9 and 10, **characterized in that** the light-weight peripheral walls of the secondary chamber and of the stabilization zone are formed by a single tube (1; 301).

12. A device according to one of claims 1 to 11, having a globally elongated general cylindrical shape, and wherein the primary chamber, the stabilization zone and the secondary chamber are positioned successively along an axial direction of the gas generator, **characterized in that** the frame part forming the secondary chamber comprises a light-weight wall (16; 350), so-called the light-weight end wall of the secondary chamber, closing one axial end of said secondary chamber.

13. A device according to one of claims 1 to 12, having a globally elongated cylindrical general shape, **characterized in that** it has a maximum outer diameter smaller than or equal to 25mm.

14. A device according to one of claims 1 to 13, **characterized in that** each light-weight wall of the secondary chamber and, where applicable, of the stabilization zone is made of one or more polymeric material(s), selected from:
- thermosetting polymeric materials, thermoplastic polymeric materials, elastomers,
- rigid polymeric materials, flexible polymeric material, elastic polymeric material,
- foams,
- synthetic polymeric materials, natural polymeric materials, artificial polymeric materials,
- homogeneous polymeric materials, laminated polymeric materials, polymeric materials reinforced with carbon or glass fibres or polymer fibres,
- homopolymers, copolymers, polymer blends, interpenetrating polymers,
- polyamides, polyolefins, vinyl polymers, styrene polymers, polyesters, acrylic polymers, polyurethanes, phenolic plastics, epoxides, EPDM, polycarbonates, polyacrilonitriles, silicones, latex,
- polymeric materials improved by one or more additive(s) selected from mineral fillers, plant fillers, plasticizers, stabilizers, colorants.

15. A device according to one of claims 1 to 14, **characterized in that** the secondary compound, stored in the secondary chamber, is packaged in a sealed flexible bag (12) or in a rigid cartridge (321).
